# DEMANDE DE BREVET EUROPEEN

(11) **EP 2 161 683 A1**
(43) Date de publication de la demande: **10.03.2010**
(21) Numéro de dépôt: 09166727.9
(22) Date de dépôt: 29.07.2009
(51) Int. Cl.: G06Q 30/00

(54) **Procédé et système de détermination d'un profil comportemental d'internaute**

(30) Priorité: 22.08.2008 FR 0855679
(71) Demandeur: Weborama, 75019 Paris (FR)
(72) Inventeur: Levy, Stéphane, 75006 Paris (FR)
(74) Mandataire: Callon de Lamarck, Jean-Robert

(57) **Abrégé**

L'invention concerne un procédé, ainsi qu'un système adapté à la mise en oeuvre du procédé, de détermination d'un profil d'un utilisateur (400) d'un réseau de communication, comprenant les étapes consistant :
• à partitionner en classes, par un module d'analyse lexicale (101) mettant en oeuvre un algorithme de segmentation permettant d'affecter des objets à différentes classes sur la base d'une mesure de similarité entre les objets, des données lexicales relatives à chaque site (301-304) d'un ensemble de sites d'intérêt (300) accessibles par le réseau,
• pour chaque utilisateur (400) :
- à constituer, par un système d'analyse du trafic (103) sur les sites d'intérêt (301-304), une liste de mots d'utilisateur relative à la navigation de l'utilisateur sur les sites d'intérêt (301-304);
- à confronter la liste de mots d'utilisateur aux classes, pour hiérarchiser les classes selon leur importance dans la liste de mots d'utilisateur.

## Description

Le domaine de l'invention est celui de l'étude des profils comportementaux d'utilisateurs de l'Internet ou de tout autre réseau de communication.

Les fournisseurs de service sur Internet, qu'ils soient régies, annonceurs, e-commerçants, éditeurs ou plus généralement diffuseurs de contenus numériques, souhaitent adapter dynamiquement le contenu numérique qu'ils proposent en fonction du profil de chaque internaute en vue d'en optimiser l'efficacité. Par exemple, ils souhaitent pouvoir afficher des bannières publicitaires en fonction du profil de chaque internaute qui visite un ou plusieurs sites ou pouvoir mettre en avant des produits différents selon le type de l'internaute.

Parmi les divers outils de ciblage publicitaire existants à ce jour, l'outil WOUSDAT^{™} de la Demanderesse, tel que par exemple décrit dans le document EP1723586, permet de prédire le profil sociodémographique d'un internaute (âge, sexe, catégorie socioprofessionnelle), ainsi que certaines thématiques en affinité avec l'internaute.

Pour ce faire, on qualifie un ensemble de sites d'intérêt en observant la navigation d'un panel d'internautes connus sur ces sites. Chaque site de l'ensemble de sites d'intérêt peut de la sorte être identifié par un profil sociodémographique ainsi que par un ou plusieurs centres d'intérêt (issus de thématiques dans lesquelles le site est classé). Le profil sociodémographique et les centres d'intérêts d'un internaute inconnu (ne formant pas partie du panel) sont ensuite prédits en fonction de la navigation de l'internaute inconnu sur les sites de l'ensemble de sites d'intérêt.

Si cet outil s'avère efficace pour prédire le profil sociodémographique d'un internaute, il présente cependant certains inconvénients.

En premier lieu, cet outil nécessite la constitution préalable d'un panel d'internautes connus (par exemple 300 000 internautes doivent avoir acceptés de remplir un questionnaire). Outre le fait que la constitution d'un tel panel peut se révéler relativement fastidieuse, celle-ci repose sur des données déclaratives des internautes qui peuvent éventuellement être erronées.

Par ailleurs, cet outil permet de regrouper les internautes selon leur profil sociodémographique (« qui ils sont »). Or on souhaiterait pouvoir caractériser les internautes indépendamment de « qui ils sont », en venant décrire plus en avant la diversité et la priorité de leurs centres d'intérêts.

A cet égard, on notera que l'outil existant propose de décrire les centres d'intérêts des internautes sur la base de données déclaratives des webmestres des sites d'intérêts (indication du champ thématique du site). Mais outre le fait que ces données déclaratives peuvent être erronées (le webmestre indiquant une mauvaise thématique), le webmestre est limité dans son choix à une seule thématique parmi 31.

Il s'agit ensuite d'un outil prédictif dont la précision des prédictions est plus ou moins importante en fonction de l'intensité et de la diversité de la navigation de l'internaute et qui met en oeuvre une prise de décision à risque (du type « l'internaute est un homme »). Or on souhaiterait pouvoir disposer d'un outil le plus proche possible de l'internaute.

Dans ce contexte, l'invention a pour objectif de fournir un procédé de détermination de profils fournissant des résultats plus précis, notamment en ne tenant compte que de données non déclaratives, qui puisse permettre de réaliser un ciblage comportemental plutôt qu'un ciblage sociodémographique, en atteignant les internautes selon la cible d'un annonceur directement selon leurs habitudes de consommation et leurs goûts.

A cet effet, l'invention propose selon un premier aspect un procédé de détermination d'un profil d'un utilisateur d'un réseau de communication, comprenant les étapes consistant :
- à partitionner en classes, par un module d'analyse lexicale mettant en oeuvre un algorithme de segmentation permettant d'affecter des objets à différentes classes sur la base d'une mesure de similarité entre les objets, des données lexicales relatives à chaque site d'un ensemble de sites d'intérêt accessibles par le réseau,
- pour chaque utilisateur :
   - à constituer, par un système d'analyse du trafic sur les sites d'intérêt, une liste de mots d'utilisateur relative à la navigation de l'utilisateur sur les sites d'intérêt;
   - à projeter la liste de mots d'utilisateur sur les classes, pour hiérarchiser les classes selon leur importance dans la liste de mots d'utilisateur.

Certains aspects préférés, mais non limitatifs, de ce procédé sont les suivants :
- il comprend une étape d'analyse lexicale :
   ○ du contenu littéraire de chaque site de l'ensemble de sites d'intérêts pour en extraire des mots, et/ou
   ○ des champs descriptifs de chaque site de l'ensemble de sites d'intérêts pour en extraire des mots, et/ou
   ○ du contenu d'une requête formulée par un utilisateur le dirigeant vers l'un des sites de l'ensemble de sites d'intérêt pour en extraire des mots ;
   et une étape de stockage desdits mots dans une base de données lexicales reliée au module d'analyse lexicale ;
- il comprend une étape consistant, pour le système d'analyse lexical, à associer un mot à son lemme en utilisant un lexique de lemmes stocké dans la base de données lexicales ;
- il comprend une étape consistant à analyser pendant une période donnée le nombre d'occurrences d'un mot dans les requêtes d'utilisateurs dirigeant vers un site de l'ensemble de sites d'intérêt, et à insérer le mot dans le lexique lorsque le nombre d'occurrences est supérieur à un seuil.
- l'algorithme de segmentation utilise pour mesure de similarité un indice de similarité entre deux mots calculé en prenant en compte le nombre d'occurrences simultanées des deux mots dans les données lexicales.
- la distance lexicale entre deux mots correspond au ratio du nombre d'occurrences simultanées des deux mots dans les données lexicales avec le produit des occurrences de chacun des mots dans les données lexicales.
- l'algorithme de segmentation est l'algorithme des C-moyennes ou l'algorithme des C-moyennes floues.
- il comprend, pour un utilisateur, l'analyse lexicale des requêtes formulées par l'utilisateur dirigeant sur l'un des sites d'intérêts pour constituer une liste de mots d'utilisateur comprenant les mots desdites requêtes.
- un poids est associé à chaque mot de la liste de mots d'utilisateur en fonction de la fréquence du mot dans les requêtes, de manière à constituer un nuage de mots d'utilisateur.
- il comprend pour chaque site de l'ensemble des sites d'intérêt, l'analyse lexicale des requêtes formulées par les utilisateurs dirigeant vers le site pour constituer une liste de mots de site comprenant les mots desdites requêtes ;
- un poids est associé à chaque mot de la liste de mots de site en fonction de la fréquence du mot dans les requêtes, de manière à constituer un nuage de mots de site.
- il comprend une étape de débruitage de la liste ou du nuage de mots de site, comprenant les opérations consistant
   ○ à partitionner en classes l'ensemble du contenu lexical du site ;
   ○ à partitionner en classes tout mot de la liste ou du nuage de mots de site,
   ○ à supprimer un mot de la liste ou du nuage de mots de site si sa propre partition de classes et la partition de classes du site ne présentent aucun recouvrement.
- il comprend l'ajout au nuage de mots d'utilisateur des mots des nuages de mots de site de chacun des sites de l'ensemble des sites d'intérêt, chaque mot d'un nuage de mot de site étant pondéré en fonction du nombre de visites de l'utilisateur sur le site.
- la projection d'une liste ou nuage de mots d'utilisateur aux classes consiste pour chaque classe à faire la somme des poids des mots de la liste ou du nuage de mots appartenant à cette classe.
- lorsqu'un utilisateur se connecte via le réseau à un serveur hébergeant un site, le serveur transmet une requête d'identification de l'utilisateur à un système de détermination de profil comprenant le module d'analyse lexicale, le système de détermination de profil renvoie au serveur une liste hiérarchisée des classes selon leur importance dans la liste de mots d'utilisateur, et le serveur adapte la présentation du site en fonction de la liste hiérarchisée.

Selon un second aspect, l'invention propose un système apte à mettre en oeuvre le procédé selon le premier aspect de l'invention.

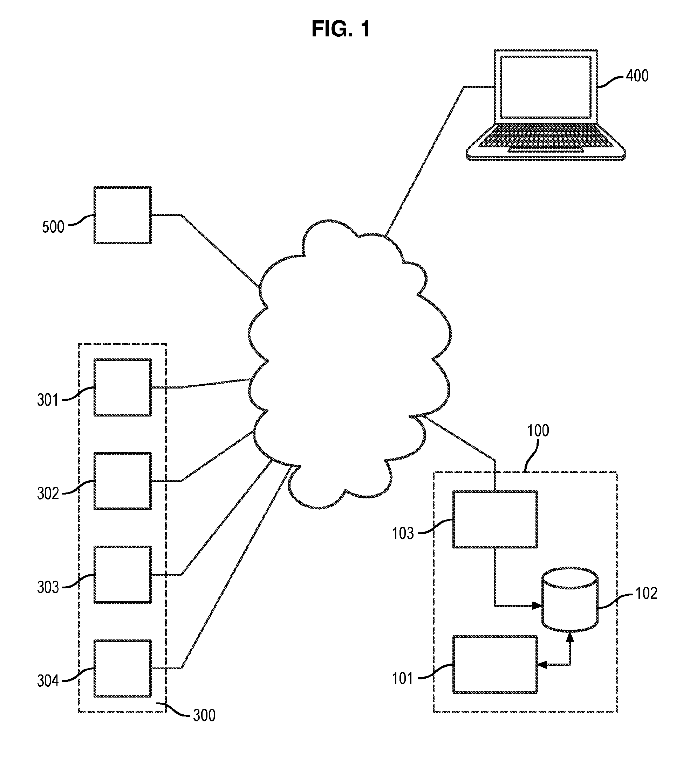

D'autres aspects, buts et avantages de la présente invention apparaîtront mieux à la lecture de la description détaillée suivante de formes de réalisation préférées de celle-ci, donnée à titre d'exemple non limitatif, et faite en référence à la figure unique annexée sur laquelle est représenté un schéma d'un système de détermination de profil conforme au second aspect de l'invention.

Sur la figure, le système de détermination de profil 100 est relié à un réseau de communication 200 (tel qu'Internet) auquel sont connectés un ensemble 300 de serveurs Web d'intérêt 301 à 304. Chaque serveur Web héberge un site Web ou un contenu numérique mis à la disposition des utilisateurs du réseau 200 (les internautes) par un fournisseur de services.

Le système de détermination de profil 100 comprend un module d'analyse lexicale 101 apte à mettre en oeuvre un algorithme de segmentation permettant d'affecter des objets à différentes classes sur la base d'une mesure de similarité entre les objets. Le module d'analyse lexicale 101 permet ainsi de regrouper par classes des données lexicales relatives à chaque site ou partie de site 301-304 de l'ensemble de sites d'intérêt 300.

On réalise ainsi dans le cadre de l'invention une analyse lexicale et une segmentation en classes d'un corpus (c'est-à-dire un ensemble de documents auxquels sont associés des mots) formé par l'ensemble des sites d'intérêts 300.

Le module d'analyse lexicale 101 est relié à une base de données 102 contenant des données lexicales relatives à chaque site ou partie de site 301-304 de l'ensemble de sites d'intérêt 300.

Les données lexicales relatives à l'un des sites ou partie de site 301-304 de l'ensemble de sites d'intérêt 300 qui sont stockées dans la base de données 102 comprennent typiquement, sans pour autant que cela ne soit limitatif, les mots présents dans les champs descriptifs d'une page Web du site 301-304 (c'est-à-dire les balises de l'en-tête du code source d'une page Web du site, par exemple la balise 'Title' dans laquelle est indiqué le titre de la page, la balise 'Meta description' dans laquelle est présentée une description de la page, ou encore la balise 'Keywords' dans laquelle sont indiqués différents mots clés de la page). On notera que d'une manière plus générale l'ensemble du code source d'une page Web est stocké dans la base de données 102 et que les mots présents dans les champs descriptifs de la page sont ensuite extraits de ce code source.

La base de données 102 peut également comprendre le contenu littéraire de la page Web du site 301-304. A cet effet, le module d'analyse lexicale comprend avantageusement des moyens pour réaliser (selon une technique dite de 'parsing' selon la terminologie anglo-saxonne) une analyse grammaticale d'une page Web de manière à en extraire les mots.

La base de données 102 peut également comprendre les mots présents dans les requêtes des internautes dans les moteurs de recherche ayant permis d'aboutir à la page Web du site 301-304. A cet effet, le système de détermination de profil 100 comprend un module d'analyse de trafic 103, qui sera détaillé plus en avant par la suite, relié au réseau 200 et disposant de moyens d'enregistrement et de traitement de données de trafic relatives aux internautes visitant les pages Web des sites 301-304 de l'ensemble de sites d'intérêt 300.

Selon un mode de réalisation possible de l'invention, la base de données 102 associée au module d'analyse lexicale 101 stocke un lexique de lemmes dans lequel à un lemme unique peut correspondre plusieurs mots.

Le lexique permet ainsi de rediriger les mots issus des différentes sources de données lexicales présentées ci-dessus à titre d'exemples non limitatifs, vers leurs lemmes. En faisant correspondre un lemme unique à plusieurs mots (par exemple les forme pluriel et singulier d'un nom commun sont injectées vers la forme singulier, les formes conjuguées d'un verbe sont injectées vers le verbe), les dimensions de l'espace vectoriel considéré pour la constitution des grappes thématiques (voir ci-après pour une présentation plus détaillée) peuvent être réduites.

De manière avantageuse, le module d'analyse lexicale 101 comprend des moyens aptes à faire évoluer le lexique pour y inclure des néologismes. A cet effet, le module d'analyse de trafic 103 peut être configuré de manière à calculer, par exemple sur une base journalière, le nombre d'occurrences d'un mot dans l'ensemble des requêtes des internautes les dirigeant vers l'un des sites 301-304 de l'ensemble des sites d'intérêt 300. Quand pour un mot ne figurant pas dans le lexique, le nombre d'occurrences dépasse un seuil prédéterminé, le module d'analyse de trafic 103 informe le module d'analyse lexicale 101 que ce mot doit être inséré dans le lexique stocké dans la base de données 102.

Dans ce qui suit, on utilisera le terme « mot » pour désigner le lemme associé au mot.

Chacun des mots du lexique présente un certain nombre d'occurrences dans le corpus. Et tous les mots ont, lorsque considérés deux à deux, un certain nombre de cooccurrences.

On définit ci-après un indice de similarité entre deux mots du corpus comme étant la quantité (nombre de cooccurrences)²/(produit des occurrences).

Ainsi, si deux mots se retrouvent tout le temps ensemble dans le corpus, leur indice de similarité est de 1. Au contraire, si deux mots ne se retrouvent jamais ensemble dans le corpus, leur indice de similarité est nul.

L'indice de similarité représente ainsi un écart au sens lexical entre deux mots dans le corpus, l'indice de similarité étant utilisé comme mesure de similarité par l'algorithme de segmentation.

Le corpus comprenant N mots, on associe de la sorte à tout mot i du corpus un vecteur à N dimensions dont la j-ième composante est l'indice de similarité entre les mots i et j.

Afin de partitionner en classes l'ensemble des mots du corpus, le module d'analyse lexicale met ainsi en oeuvre un algorithme de segmentation de données (on parle de 'clustering' selon la terminologie anglo-saxonne) pour réaliser une taxonomie de l'espace vectoriel de tous les mots du corpus où chaque mot est représenté par son vecteur à N dimensions.

L'invention n'est bien entendu pas limitée par l'algorithme de partitionnement de données mis en oeuvre, ni par le nombre de classes finalement obtenues.

Selon un mode de réalisation possible de l'invention, le module d'analyse lexicale 101 met en oeuvre la méthode des C-moyennes.

Selon cette méthode des C-moyennes, chaque mot du corpus est affecté sans équivoque à une classe unique selon l'enchaînement supervisé suivant :
- définition d'un nombre k de classes thématiques souhaitées, et sélection initiale d'un mot par classe (selon le partitionnement que l'on souhaite a priori obtenir ; par exemple les mots « nature », « cosmétique », « automobile », etc. sont retenus). Le mot associé à une classe est dénommé centroïde.
- Itération des étapes suivantes
   ○ Affectation d'un mot à la classe dont le centroïde est le plus proche selon la distance euclidienne dans l'espace vectoriel considéré (la distance euclidienne entre deux mots i et j correspond ainsi à la racine carrée de la somme des carrés des différences des composantes des vecteurs représentant les mots i et j dans l'espace vectoriel à N dimensions) ;
   ○ Calcul des nouveaux centroïdes (on prend la moyenne, composante par composante, de tous les mots d'une classe)
- Les itérations se poursuivent jusqu'à stabilisation des frontières entre les classes (par exemple la somme intra-distance entre toutes les classes est inférieure à un seuil).

En variante, le module d'analyse lexicale 101 peut mettre en oeuvre la méthode des C-moyennes floues de sorte que chaque mot du corpus dispose d'un poids dans chaque classe, la somme des poids étant égale à 1.

Une fois le partitionnement en classes achevée, un étiquetage qualitatif des classes est réalisé pour attribuer un nom à chaque classe (par exemple « droit des affaires », « tourisme découverte », « tourisme location », etc.)

A titre d'exemple de mise en oeuvre de l'invention, le contenu lexical de 200 000 sites d'intérêt est analysé pour créer une soixantaine de classes regroupant les mots du lexique.

Le système de détermination de profil 100 comprend par ailleurs un module 103 d'analyse du trafic sur les sites 301-304 de l'ensemble de sites d'intérêt 300 apte à constituer pour chaque utilisateur 400 (internaute) du réseau 200 un nuage de mots d'utilisateur relatif à la navigation de l'utilisateur 400 sur les sites d'intérêt 301-304.

Dans ce qui suit, un nuage de mots désigne une liste de mots dans laquelle un poids est associé à chaque mot. L'invention n'est toutefois par limitée à l'utilisation de poids, et on comprend qu'elle peut être mise en oeuvre en utilisant des poids identiques pour chacun des mots d'un nuage (on parlera alors de liste de mots plutôt que de nuage de mots).

Le module d'analyse du trafic 103 est par exemple un système de marquage de page selon lequel certaines pages des sites hébergés par les serveurs Web 301-304 d'intérêt sont marquées par des marqueurs de page.

Ces marqueurs sont interprétés par l'internaute 400 lors de l'affichage d'une page des sites hébergés par les serveurs Web 301-304 et génèrent une requête (à titre d'exemple non limitatif suivant le protocole http sur internet) qui sera renvoyée vers le module d'analyse du trafic 103 via le réseau 200. Chaque requête indique au module 103 que l'internaute charge une page Web donnée. On relèvera ici que la requête formulée par l'internaute l'ayant dirigée vers la page marquée peut également être alors transmise au module 103.

En variante, le module d'analyse du trafic 103 peut analyser les fichiers log (ou journaux de connexion) générés par les serveurs Web 301-304 lors de la consultation par un internaute d'une page Web hébergée par un de ces serveurs 301-304.

Le suivi de la navigation d'un internaute est réalisé au fur et à mesure des jours, à l'aide d'un identifiant unique de l'internaute stocké dans un cookie (ou témoin de connexion) sauvegardé dans le navigateur de l'internaute. Cet identifiant est transmis à chaque requête généré par un marqueur de page présent sur les sites 301-304 de l'ensemble de sites d'intérêt 300.

Le module d'analyse du trafic 103 comporte une base de données dans laquelle sont enregistrées les données de trafic relatives à la navigation des internautes visitant les pages des sites Web d'intérêt. Ces données de trafic comprennent notamment l'identifiant unique de l'internaute, le site visité, l'heure de la visite, l'adresse IP de l'internaute, ainsi que le contenu sémantique des requêtes formulées par les internautes pour accéder aux pages des sites Web d'intérêt.

Plus précisément, le contenu de la requête formulée par un internaute l'ayant dirigée vers l'un des sites 301-304 est récupéré en analysant le 'referrer' (c'est-à-dire la page de provenance ayant amené à visiter la page courante ; il s'agit ainsi de la page n-1) transmis par le marqueur.

On détaille ci-après un exemple de récupération du contenu sémantique d'une requête d'internaute.

Après avoir effectué la recherche « analyse comportementale » sur le moteur de recherche « Google » (marque déposée), et sélectionné une des pages de résultats, on peut constater que l'adresse url de provenance (ou 'referrer') sur cette page
est http://www.google.fr/search?hl=fr&q=analyse+comportementale&btnG=R echerche+Google&meta=

Cette adresse est directement accessible par le marqueur, qui la transmet alors lors de la requête émise par le marqueur vers le module d'analyse du trafic 103.

En mettant en oeuvre un ensemble de règles, notamment des règles propres à chaque moteur de recherche (portail, site web), le module 103 peut extraire de cette adresse la requête elle même, ici contenue dans la partie q=analyse+comportementale.

Le nuage de mots d'utilisateur est un condensé sémantique de la navigation de l'utilisateur dans lequel un poids peut être associé à chaque mot d'utilisateur (visuellement un nuage de mots correspond à une liste de mots éparse, avec des tailles de caractères différents selon l'importance du mot).

Le nuage de mots d'utilisateur est par exemple mis à jour quotidiennement.

Le nuage de mots d'utilisateur résulte de la navigation de l'utilisateur sur les sites d'intérêt et des requêtes réalisées par l'utilisateur qui dirigent vers l'un des sites d'intérêt.

Plus précisément, le nuage de mots d'utilisateur peut résulter de l'agrégation des mots présents dans les requêtes de l'utilisateur dirigeant vers l'un des sites d'intérêt (avec le cas échéant un poids associé à chaque mot en fonction de sa fréquence) et des mots présents dans des nuages de mots de site (avec le cas échéant un poids associé à chaque mot en fonction du nombre de visite de l'utilisateur sur un site d'intérêt).

Le nuage de mot d'un l'utilisateur N peut notamment être une combinaison, en particulier une combinaison linéaire, des sous nuages suivants :
- nuage issue des propres requêtes A de l'internaute
- nuage issue des sites visités B
en particulier selon N = a * A + b * B

Par nuage, on sous-entend ici un vecteur dans l'espace des 60 classes (par exemple) retenues.

Un nuage de mots de site correspond aux mots présents dans les requêtes des utilisateurs permettant d'aboutir au site, avec un poids associé à chaque mot selon sa fréquence dans les requêtes, et aux mots présents sur les pages du site.

Un nuage de mots de site est par exemple mis à jour toutes les deux semaines.

Un nuage de mots de mot d'un site (S) peut ainsi être une combinaison des sous nuages suivants :
- nuage issue de l'analyse sémantique du site / page (A) ;
- nuage issue de l'ensemble des requêtes des internautes (R)

Le nuage R est lui-même une combinaison des requêtes des internautes selon R = Somme (i, internautes ayant généré une requête pour arriver sur le site)(alpha_i* R_i), avec alpha_i qui est un poids donné à l'internaute (on peut donner plus d'importances à certains internautes suivant par exemple la fréquence de leur visite sur le réseau, le nombre de requêtes qu'ils effectuent au général, uniquement sur ce site, de façon à diminuer ou augmenter son importance dans le calcul de ce vecteur) et R_i qui est le vecteur issue de l'analyse de la requête ayant permis à l'internaute d'arriver sur le site.

Le nuage A issue de l'analyse sémantique du site / page est également une combinaison de plusieurs vecteurs sémantiques, par exemple :
- vecteur issu du titre de la page (At) ;
- vecteur issu de la description (Ad) ;
- vecteur issu des mots clefs de la page (balise keywords) (Ak)
- vecteur issu de l'intégralité du contenu de la page (Ac)

Selon A = a * At + b * Ad + c * Ak + d Ac, où les coefficients a, b, c, d peuvent dépendre de chaque site / page (en fonction par exemple du nom de domaine).

Selon un mode de réalisation préférentiel de l'invention, le module d'analyse lexical 101 dispose de moyens aptes à débruiter un nuage de mots de site selon les opérations suivantes.

L'ensemble du contenu lexical du site est partitionnés en classes selon un algorithme similaire à ceux décrits précédemment en liaison avec le partitionnement en classes des données lexicales de l'ensemble des sites d'intérêt, mais ici limité au contenu lexical du site. Puis on partitionne en classes tout mot du nuage de mots de site (le mot étant considéré en soi comme un nuage de mots réduits à un singleton). On compare ensuite les classes dans lesquelles ce mot est classé selon sa propre partition de classes et selon la partition de classes du site. S'il n'existe aucun recouvrement, ou un nombre de recouvrement limité, entre ces classes, le mot est supprimé du nuage de mots de site.

Une fois constitué, le nuage de mots d'utilisateur peut être projeté sur les différentes classes de manière à hiérarchiser les classes selon leur importance dans le nuage de mots d'utilisateur. On obtient de la sorte un vecteur dont chaque coordonnée représente une des classes. Afin de construire ce vecteur, on calcule pour chaque classe, la somme des poids des mots du nuage de mots d'utilisateur qui appartiennent à la classe.

En retenant un nombre limité de classes, par exemple huit, on peut dresser une liste des centres d'intérêts dominants de l'utilisateur.

Afin de déterminer la cible d'un annonceur, les classes les plus en affinité avec la campagne publicitaire sont sélectionnées. Une partition d'internautes est alors définie qui correspond aux internautes présentant les classes sélectionnées parmi leurs centres d'intérêt dominants.

A titre d'exemples, pour une campagne de publicité pour une boisson rafraîchissante aux fruits, les classes « sports », « musique » et « jeux vidéo » peuvent être sélectionnées pour définir une partition « adolescent hyperactif ». Pour le lancement d'un véhicule 4*4 à destination des professionnels (viticulteurs), les classes « automobile », « gastronomie-terroir » peuvent être sélectionnées pour définir une partition « professionnels du terroir à la recherche d'un véhicule ».

Les classes peuvent être sélectionnées de manière qualitative lors du lancement de la campagne. Les classes peuvent également être déterminées automatiquement, par exemple en analysant les données de connexion ou de transformation (par exemple demande de crédit, commande de catalogue en ligne, etc.) de l'annonceur et en définissant la partition d'internautes comme étant ceux qui se connectent ou qui transforment. Les classes sélectionnées correspondent alors aux classes les plus fréquentes pour cette partition d'internautes.

Lorsqu'un internaute se connecte à un site, le serveur Web 500 qui héberge ce site transmet au système de détermination de profil 100 une requête d'identification de l'internaute. Le système 100 fournit en retour, en temps réel, des données relatives au profil de l'internaute, notamment la liste des centres d'intérêts dominants de l'internaute. Le serveur Web 500 pourra alors adapter la présentation du site (graphisme, mode de navigation, espaces publicitaires) en fonction des centres d'intérêt de l'internaute.

Jusqu'à présent un annonceur qui voulait diffuser de la publicité sur internet aux personnes en affinité avec le football par exemple allait se diriger vers les sites spécialisés. L'invention permet de pouvoir diffuser cette publicité aux personnes ayant comme partition "football" quel que soit le site visité, en s'affranchissant par conséquent du contenu du site.

Si l'internaute est détecté comme étant fan de foot (ce qui se traduit simplement par : visites fréquentes de sites de football, requêtes ayant rapport au football), la publicité de l'annonceur pourra par exemple être diffusée sur un site relatif par exemple à la finance ou à l'actualité.

On notera que dans ce qui précède on peut indifféremment travailler avec une granulométrie au niveau d'une page web ou d'un site (ensemble de pages).

Par ailleurs, on a pris dans ce qui précède l'exemple de pages Web et de sites web. L'invention n'est toutefois pas limitée à cet exemple d'application, mais a vocation à s'appliquer de manière plus large à tout réseau de communication.

A titre d'exemple, l'invention peut ainsi trouver application dans la télévision diffusée par internet pour optimiser et individualiser les publicités diffusées aux téléspectateurs sur les chaines contrôlées par le fournisseur d'accès, et afficher des publicités dynamiques entre les émissions.

Dans un tel cas de figure, le vecteur de chaque émission de télévision peut être obtenu par la description et le titre de l'émission. Une dimension temporelle (temps regardé de l'émission, pourcentage total vu...) peut en outre être prise en compte de façon à donner plus ou moins d'importance à chaque émission. L'identifiant unique de l'utilisateur est par exemple l'identifiant de son boitier permettant de recevoir la télévision.

## Revendications

1. Procédé de détermination d'un profil d'un utilisateur (400) d'un réseau de communication (200), comprenant les étapes consistant :
• à partitionner en classes, par un module d'analyse lexicale (101) mettant en oeuvre un algorithme de segmentation permettant d'affecter des objets à différentes classes sur la base d'une mesure de similarité entre les objets, des données lexicales relatives à chaque site (301-304) d'un ensemble de sites d'intérêt (300) accessibles par le réseau (200),
• pour chaque utilisateur (400) :
- à constituer, par un système d'analyse du trafic (103) sur les sites d'intérêt (301-304), une liste de mots d'utilisateur relative à la navigation de l'utilisateur sur les sites d'intérêt (301-304);
- à projeter la liste de mots d'utilisateur sur les classes, pour hiérarchiser les classes selon leur importance dans la liste de mots d'utilisateur.

2. Procédé selon la revendication 1, comprenant une étape d'analyse lexicale :
• du contenu littéraire de chaque site (301-304) de l'ensemble de sites d'intérêts (300) pour en extraire des mots, et/ou
• des champs descriptifs de chaque site (301-304) de l'ensemble de sites d'intérêts (300) pour en extraire des mots, et/ou
• du contenu d'une requête formulée par un utilisateur (500) le dirigeant vers l'un des sites (301-304) de l'ensemble de sites d'intérêt (300) pour en extraire des mots ;
et une étape de stockage desdits mots dans une base de données lexicales (102) reliée au module d'analyse lexicale (101).

3. Procédé selon la revendication 2, comprenant une étape consistant, pour le système d'analyse lexical (101), à associer un mot à son lemme en utilisant un lexique de lemmes stocké dans la base de données lexicales (102).

4. Procédé selon la revendication 3, comprenant une étape consistant à analyser pendant une période donnée le nombre d'occurrences d'un mot dans les requêtes d'utilisateurs dirigeant vers un site de l'ensemble de sites d'intérêt, et à insérer le mot dans le lexique lorsque le nombre d'occurrences est supérieur à un seuil.

5. Procédé selon l'une des revendications 1 à 4, dans lequel l'algorithme de segmentation utilise pour mesure de similarité un indice de similarité entre deux mots calculé en prenant en compte le nombre d'occurrences simultanées des deux mots dans les données lexicales.

6. Procédé selon la revendication 5, dans lequel l'indice de similarité entre deux mots correspond au ratio du nombre d'occurrences simultanées des deux mots dans les données lexicales avec le produit des occurrences de chacun des mots dans les données lexicales.

7. Procédé selon l'une des revendications 5 ou 6, dans lequel l'algorithme de segmentation est l'algorithme des C-moyennes ou l'algorithme des C-moyennes floues.

8. Procédé selon l'une des revendications 1 à 7, comprenant, pour un utilisateur, l'analyse lexicale des requêtes formulées par l'utilisateur dirigeant sur l'un des sites d'intérêts pour constituer une liste de mots d'utilisateur comprenant les mots desdites requêtes.

9. Procédé selon la revendication 8, dans lequel un poids est associé à chaque mot de la liste de mots d'utilisateur en fonction de la fréquence du mot dans les requêtes, de manière à constituer un nuage de mots d'utilisateur.

10. Procédé selon l'une des revendications 1 à 7, comprenant, pour chaque site de l'ensemble des sites d'intérêt, l'analyse lexicale des requêtes formulées par les utilisateurs dirigeant vers le site pour constituer une liste de mots de site comprenant les mots desdites requêtes.

11. Procédé selon la revendication 10, dans lequel un poids est associé à chaque mot de la liste de mots de site en fonction de la fréquence du mot dans les requêtes, de manière à constituer un nuage de mots de site.

12. Procédé selon l'une des revendications 10 ou 11, comprenant une étape de débruitage de la liste ou du nuage de mots de site, comprenant les opérations consistant :
• à partitionner en classes l'ensemble du contenu lexical du site ;
• à partitionner en classes tout mot de la liste ou du nuage de mots de site ;
• à supprimer un mot de la liste ou du nuage de mots de site si sa propre partition de classes et la partition de classes du site ne présentent aucun recouvrement.

13. Procédé selon l'une des revendications 11 ou 12 prise en combinaison avec la revendication 9, comprenant en outre l'ajout au nuage de mots d'utilisateur des mots des nuages de mots de site de chacun des sites de l'ensemble des sites d'intérêt, chaque mot d'un nuage de mot de site étant pondéré en fonction du nombre de visites de l'utilisateur sur le site.

14. Procédé selon l'une des revendications 8 à 13, dans lequel la confrontation d'une liste ou nuage de mots d'utilisateur aux classes consiste pour chaque classe à faire la somme des poids des mots de la liste ou du nuage de mots appartenant à cette classe.

15. Procédé selon l'une quelconque des revendications précédentes, dans lequel lorsqu'un utilisateur (400) se connecte via le réseau (200) à un serveur hébergeant un site (500), le serveur transmet une requête d'identification de l'utilisateur à un système de détermination de profil comprenant le module d'analyse lexicale, le système de détermination de profil renvoie au serveur une liste hiérarchisée des classes selon leur importance dans la liste de mots d'utilisateur, et le serveur adapte la présentation du site en fonction de la liste hiérarchisée.

16. Système de détermination de profil d'un profil d'un utilisateur (400) d'un réseau de communication (200), comprenant:
• un système d'analyse du trafic sur les sites d'intérêt (301-304), apte à constituer pour chaque utilisateur (400), une liste de mots d'utilisateur relative à la navigation de l'utilisateur sur les sites d'intérêt (301-304);
• un module d'analyse lexicale (101) apte
- à mettre en oeuvre un algorithme de segmentation permettant d'affecter des objets à différentes classes sur la base d'une mesure de similarité entre les objets, pour partitionner en classes des données lexicales relatives à chaque site (301-304) d'un ensemble de sites d'intérêt (300) accessibles par le réseau (200),
- à confronter la liste de mots d'utilisateur aux classes, pour hiérarchiser les classes selon leur importance dans la liste de mots d'utilisateur.
